# EUROPEAN PATENT APPLICATION

(11) **EP 3 034 194 A1**
(43) Date of publication of application: **22.06.2016**
(21) Application number: 15183909.9
(22) Date of filing: 04.09.2015
(51) Int. Cl.: B21J 15/32, B23K 9/20

(54) **JOINING ELEMENT FEED DEVICE**

(30) Priority: 19.12.2014 DE 102014119189
(71) Applicant: Newfrey LLC, New Britain, CT 06053 (US)
(72) Inventor: HAIN, Jochen, 35394 Giessen (DE); MÜLLER, Dirk, 35394 Giessen (DE); OHLY, Sascha, 35394 Giessen (DE); HETT, Uwe, 35394 Giessen (DE)
(74) Representative: Witte, Weller & Partner Patentanwälte mbB

(57) **Abstract**

A joining element feed device (30) comprising a container (36) into which joining elements (20) can be poured and which is covered by means of a cover (38), said joining element feed device comprising a supply unit (40) that supplies the joining elements (20) from the container (36) for a joining process, and said joining element feed device comprising an identification device (50) that is embodied so as to identify joining elements that are to be poured into the container (36) and/or a person (83) who intends to pour the joining elements (20") into the container (36), wherein the identification device (50) comprises a control unit (54) that is connected to a reading device (52) for reading an identification code (82; 86), wherein an identification code (82; 86) that has been read by means of the reading device is checked and/or recorded in the control unit.

The control unit (54) of the identification device (50) is arranged on the cover (38), wherein a closing device (62) that can by actuated by means of a motor and is connected to the control unit is embodied so as to close the container (36). (Fig. 1)

## Description

The present invention relates to a joining element feed device comprising a container into which joining elements can be poured and which is covered by means of a cover, said joining element feed device comprising a supply unit that supplies the joining elements from the container for a joining process, and said joining element feed device comprising an identification device that is embodied so as to identify joining elements that are to be poured into the container and/or a person who intends to pour the joining elements into the container, wherein the identification device comprises a control unit that is connected to a reading device for reading an identification code, wherein an identification code that has been read by means of the reading device is checked and/or recorded in the control unit.

Joining element feed devices of the type mentioned above are used by way of example in car body construction during the manufacture of motor vehicles. Joining machines are used in this application area for the purpose of attaching joining elements to a vehicle body, or for the purpose of producing connections by means of such joining elements, by way of example metal plate connections or the like.

The joining machines often comprise robots, wherein the joining processes are performed in an automated manner. It is also known to feed joining elements in an automated manner to a joining tool of such a joining machine. The joining elements can be delivered by way of example by means of a blast-air conveyor.

The joining elements are often available as bulk goods, by way of example in ready packed bags or the like. Joining element feed devices of the above described type comprise a container into which the joining elements can be poured as bulk goods. The container is generally connected to a separating device that is used to remove joining elements from the container and make said joining elements available separately in the correct place or position to a conveyor device, such as a blast-air conveyor device. Separate joining elements or joining elements in groups can be fed to a joining tool by the conveyor device, by way of example via a tube. Alternatively, it is also possible to feed joining elements individually or in groups to a joining element transfer station from where a joining tool can receive in each case individual or multiple joining elements that are then accommodated in a magazine of the joining tool.

The joining elements can be screws, rivets, blind rivets, punch rivets but are in particular studs that are joined to the metal bodywork or the like, in particular where access is available from one side only. The studs can be steel studs, aluminium studs or other metal studs, such as by way of example are used for stud welding. However, the studs can also be produced from synthetic material. The joining method used can be a welding method, as mentioned, but can also be a thermoplastic welding method, a bonding method or the like.

Joining elements of the above described type are required in a large quantity when constructing car bodies of motor vehicles. The joining elements are tailored to suit the respective applications. This leads to a large number of different types of joining elements that are used within the scope of car body construction. A particular type of joining element is generally allocated to each joining site. If an incorrect joining element is used at a joining site, this can lead to a defective joining connection that will subsequently require costly reworking or the like.

It is therefore known to block by means of a mechanical lock the possibility of refilling a container of a joining element feed device, wherein only experienced and trained operating personnel have a key for this mechanical lock. The operating person performs an optical inspection prior to filling the container with joining elements.

It is known from document EP 1 297 917 B1 to hold a supply of joining elements in a sealed container. The sealed container can be secured in a releasable manner in an aperture of a hopper. The container comprises a seal that can be broken. Moreover, means are provided in order to check whether the contents of the container are correct and a means is provided in order to break the seal that can be broken in order to allow the correct fastening elements to pass into the storage container.

The container can comprise a bar code.

It follows from this that an object of the invention is to provide an improved joining element feed device that is constructed in a simple and compact manner and that renders it possible to retrofit existing jointing element feed devices.

The above object is achieved in the case of the joining element feed device mentioned in the introduction by virtue of the fact that a closing device that can be actuated by means of a motor and is connected to the control unit is embodied so as to close the container.

The reading device can read an identification code and transmit this to the control unit. The control unit is moreover connected to the closing device that can be actuated by means of a motor and said control unit can actuate the closing device in dependence upon an identification code that has been read in, in other words by way of example in the case of an approved identification code, said control unit can open and release the container so that joining elements can be poured into the container.

The joining element feed device can preferably be constructed in a structurally simple manner since the control unit can be arranged on the cover. Consequently, the joining element feed device is also suitable for retrofitting into existing joining element feed devices. In this case, it is only necessary to replace the cover. In an alternative embodiment, the control unit can also be arranged at any other site on a housing of the supply device and in fact at a storage site or a fastening site. It is possible to provide such a site for retrofitting said control unit to new feed devices. Irrespective of the arrangement of the control unit on the cover or at any other position, it is preferred if a signal light can be integrated into the cover in order to display an identification process or any other display device for this purpose.

The joining elements are preferably available as bulk goods. The joining elements can be delivered in a sack or any other container in which they are preferably held as bulk goods. An identification code can be provided on the sack or bag or on any other container.

In the simplest case, the identification code can be a line code such as bar code. The identification code can however also be an RFID label, a QR code, a matrix code or the like. In the simplest case, the identification code can also be formed by means of an alphanumeric code, by means of a pictogram or similar.

The reading device is embodied so as to read one of these identification codes or a plurality of such identification codes.

As an alternative or in addition thereto, the identification device can identify a person who intends to pour joining elements into the container.

The person can be an authorized operating person who carries on him-self by way of example an identification card that can be provided with an identification code. The identification code can be of the identical type as the identification code mentioned above in order to identify the bags or containers in which joining elements have been delivered.

It is possible to increase security as a result of being able to identify an operating person. The container can be opened by way of the motorized closing device by way of example only if both a correct bag with the correct joining elements is available and has been identified accordingly and likewise an authorized operating person has been identified.

The control unit comprises preferably an interface in order to be able program the control unit. Consequently, the interface can be used in order to be able to transmit operating software or any other software of the control unit and possibly updates for said software to the control unit. It is also possible by way of such an interface to store optionally authorized identification codes of delivered joining elements and/or of operating personnel. For this purpose, the control unit can comprise a suitable memory device. Moreover, an authorized identification code and the like can be read in or the control unit can be trained during operation by way of the reading device.

The control unit and/or further elements of the identification unit can be supplied with energy by way of a current supply cable that is connected by way of example to an electrical current supply of the joining element feed device, or connected separately therefrom to a mains connection or the like.

In the simplest case, the identification device is embodied independently from other control units of a joining machine so that it is only necessary to connect a current supply. For this case, it is particularly simple to equip existing joining element feed devices. In one variant, the control unit of the identification device can however also be connected to a higher-level control unit, by way of example by way of a network (wireless or wired). In this case, by way of example the identification codes that are read in by the control unit can be transmitted to a central control unit in order in this manner to create a report regarding the operation of filling the container and in fact preferably with respect to the joining elements that have been poured into the container and/or the operating personnel who performed the filling operation.

The closing device can be pre-tensioned in a locking position so that it is fed by way of example with a suitable signal for unlocking purposes. The closing device can for this purpose comprise a suitable actuator, by way of example an electromagnetic actuator.

The container or the bag in which the joining elements are delivered in order subsequently to be poured into the container can comprise an identification code in the form of a product number or the like. The identification code can moreover comprise information regarding a particular batch and/or a particular bag or container. A bag code or identification code is preferably a product number in conjunction with a batch number and a bag number.

In the latter case, it is possible by way of example to record in the control unit whether particular bags and/or batches have already been used. Insofar as a particular batch code or bag code has already been used once, the closing device remains in the closed position, in other words is not unlocked. As a consequence, it is possible by way of example to prevent the inadmissible use of the same bag that has a correct product number but is now empty in order to bypass the identification device.

The reading device can be arranged fixed to the cover but can also be connected in a flexible manner or as required to the control unit.

The object is thus achieved in full.

In accordance with a particularly preferred embodiment, a control unit housing is fixed to the upper face or the lower face of the cover and the control unit is arranged within said housing.

As a consequence, the control unit can be fixed to the cover in a particularly simple and protected manner. An interface for programming the control unit by way of example in the form of a USB interface can be embodied on the control unit housing. Moreover, a display unit and/or operating unit can be embodied on the control unit housing and said display unit and/or operating unit can display by way of example the operating status or status of the control unit and/or of the identification unit. It is possible as an identification code is read in to provide by way of example a visual display in the form of a (e.g. green) confirmation light if the identification code was authorized, or a corresponding opposite (e.g. red) visual display if the reading procedure has not resulted in an authorized identification code being recognized.

An on/off switch that connects the control unit, the reading device and/or the closing device as required to the mains supply can also be embodied on the control unit housing.

In accordance with a preferred embodiment, the reading device is fixed with regard to the cover and/or by way of a plug connector to the control unit.

In the case of this embodiment, the reading device can be fixed by way of example to the upper face of the cover. In one variant, the reading device can extend in a manner of a cantilever arm from the cover in order to be able to achieve in this manner a reading procedure that is ergonomically simple. It is possible by way of the plug connector to connect a reading device as required so that a reading device can be used for multiple feed devices.

The connection between the reading device and the control unit can be provided preferably in a protected manner in the region of a lower face of the cover in order to prevent unintentional or wilful damage.

In accordance with a further embodiment, the reading device is embodied as a hand-held reading device that is connected by way of a flexible connection to the control unit.

The hand-held reading device can be embodied by way of example in the form of a reading gun or the like.

It goes without saying that it is possible to connect both a fixed reading device and also a hand-held reading device to the control unit.

Moreover, it is overall advantageous if the closing device is arranged on a lower face of the cover.

As a consequence, the closing device is protected to a great extend so as to prevent manipulation.

The closing device can comprise by way of example a locking bar that in a mechanically form-locking positive manner prevents the container from opening if the closing device is located in a closed position. This locking bar can be visible on the outer face of the cover. In the case of the container being released and opened, this locking bar can be pivoted out of the locking position by means of a motor.

In a preferred embodiment, a filling flap can be mounted on the cover in such a manner that it can move between a closed position and a filling position, wherein the closing device is embodied so as to lock the filling flap in the closed position with respect to the cover.

In the case of this embodiment, by way of example a control unit housing can be provided on an upper face of the cover adjacent to such a filling flap and also the reading device can also be fastened, in the plan view of the cover, adjacent to the filling flap.

In this manner, it is possible to attach all components or a majority of the components of the identification device to the cover, wherein the container is filled via the filling flap. It is also possible to arrange the closing device on the lower face of the cover. The closing device can be arranged, in a projection on the cover, so that the closing device is arranged adjacent to the filling flap and as a consequence the operation of filling the container is not hampered.

The embodiment where the filling flap is on the cover has in addition the advantage that electrical connections between by way of example the closing device and the control unit can be arranged generally in a region of the lower face of the cover where manipulations cannot occur.

In an alternative embodiment, it is however provided that the cover is mounted on the container in such a manner that it can move between a closed position and a filling position, wherein the closing device is embodied so as to lock the cover in the closed position with respect to the container.

In this variant, there is preferably no separate filling flap mounted in such a manner as to be able to move with respect to the cover. On the contrary, joining elements are poured into the container by virtue of the fact that the cover is moved into a filling position, by way of example is raised upwards.

In the case of the present invention, the term 'cover' is applied preferably to a wall of the container of the joining element feed device that closes the container from above. In the broadest sense, the cover can however also be a cover on a side wall of the container.

Moreover, it is feasible that in fact a control unit is fixed to a cover on an upper face of the housing but a filling flap is embodied on a side wall of the container.

Overall, one or more of the following advantages can be achieved with the joining element feed device in accordance with the invention. Fewer incorrect filling operations occur. It is possible optionally to detect by whom and when the joining elements had been poured into the container. In the case of production defects, it is possible where necessary to read out from the memory device details regarding the batch that was poured in during the last filling operation. The system can be replaced rapidly. The embodiment in accordance with the invention of the joining element feed device can be used in all industrial applications where parts are supplied by means of a closed device.

It goes without saying that the above mentioned features and the features that are still to be explained hereinunder can be used not only in the respective disclosed combination but rather also in other combinations or in a stand-alone arrangement without departing from the scope of the present invention.

Exemplary embodiments of the invention are illustrated in the drawing and are explained in detail in the description hereinunder. In the drawing:
- Fig. 1: is a schematic illustration of a joining machine having an embodiment of a joining element feed device in accordance with the invention;
- Fig. 2: illustrates a cover of the joining element feed device shown in Fig. 1;
- Fig. 3: is a schematic illustration of a further embodiment of a joining element feed device in accordance with the invention; and
- Fig. 4: is a schematic illustration of a further embodiment of a joining element feed device in accordance with the invention.

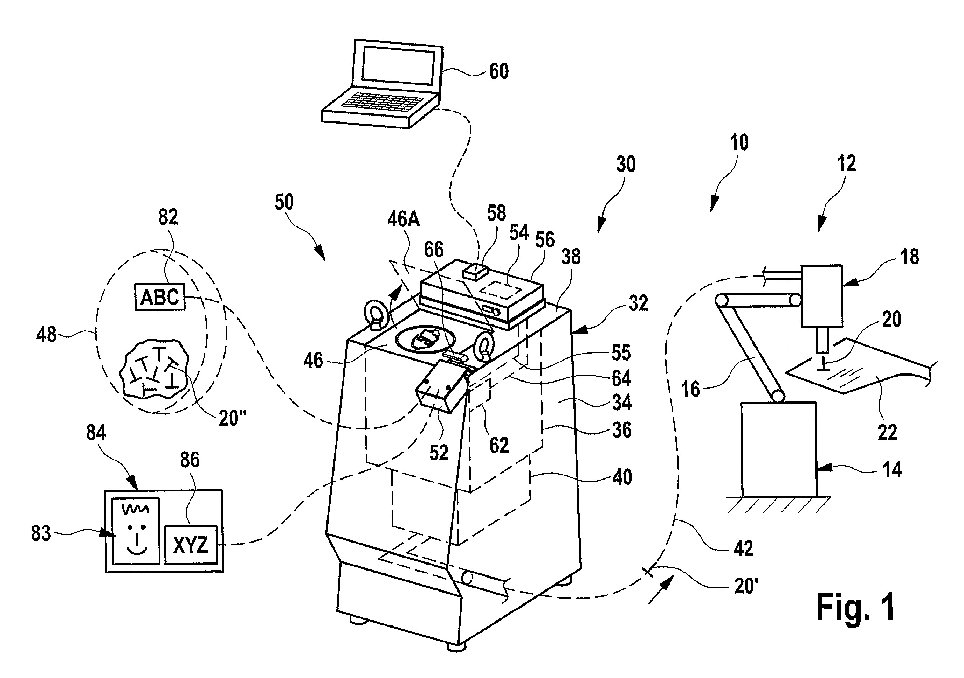

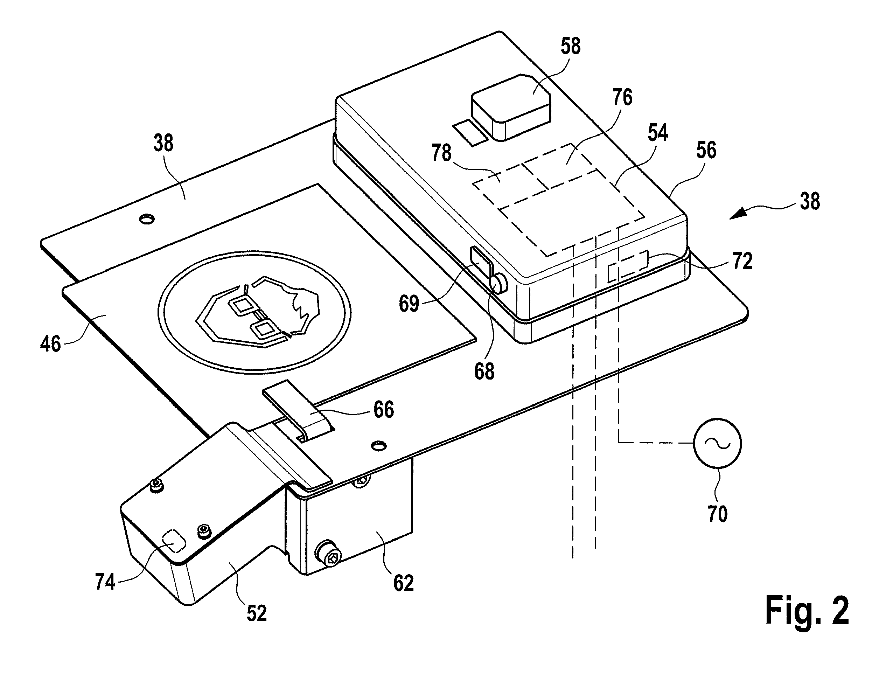

Figs. 1 and 2 illustrate in a schematic form a joining machine for use in car body construction and said joining machine is described in general by the numeral 10. The joining machine 10 comprises a joining device 12. The joining device 12 can comprise a robot 14 that has a joining tool 18 arranged on its robotic arm 16. The joining tool 18 is used to join a joining element 20 to a workpiece 22 or a joining element 20 is used to join multiple workpieces to one another.

The joining process that is performed by the joining tool 18 can be a stud welding process, a stud bonding process, a thermo-plastic stud welding process, a riveting process such as a blind riveting process or a punch riveting process, a screw process or the like.

The joining device 12 comprises a joining element feed device 30. The joining element feed device 30 is generally used to feed singularized joining elements to the joining tool 18 in order to be able to perform in this manner automated joining processes. The joining element feed device 30 can be designed so as to feed joining elements that have been singularized and have been unitized as regards their attitude to the joining tool 18 individually or else in respective groups. Moreover, it is possible for the joining element feed device 30 to feed one or multiple joining elements initially into a decentralised transfer station from where the joining tool can then pick up one or multiple joining elements for one or a plurality of joining processes. In the case of multiple joining elements, it is possible to provide a magazine where necessary for multiple joining elements on the joining tool 18.

The joining element feed device 30 comprises a feeder 32 that comprises a fixed housing 34. A container 36 for joining elements 20 is arranged in the housing 34. Moreover, a cover 38 is provided that covers the upper face of at least one of the housing 34 and the container 36.

A joining element singularizing unit 40 is provided in the housing 34, or as a separate unit, said singularizing unit being used as a supply unit. The joining element singularizing unit 40 is used to singularize out the joining elements that are available as bulk goods within the container 36 and to supply said joining elements for feeding to a joining tool 18. The feeder 32 can be connected by way of a feed tube 42 to the joining tool 18. The feed tube 42 can be a flexible tube in which joining elements 20' are fed or conveyed to the joining tool 18 as is indicated schematically in Fig. 1. However, the feed tube 42 can also be connected to a decentralized transfer station where singularized joining elements 20' or groups of joining elements are temporarily stored so that they are picked up as required by the joining tool.

A filling flap 46 is preferably embodied on the cover 38 that can also be embodied on a side wall of the housing 34 but is preferably embodied on the upper face of the housing 34, said filling flap is mounted on the cover 38 in such a manner as to be able to pivot between a closed position, which is indicated by continuous lines, and a filling position 46A. The flap 46 can be embodied as a pivot flap but it can also be embodied as a sliding flap or the like. An aperture is provided in the filling position 46A in the cover 38 and the container can be filled with joining elements, in particular the joining elements can be poured into said container 36.

The joining elements can be made available for this purpose in any manner. A preferred variant is to make the joining elements available in a bag 48 as is illustrated schematically in Fig. 1 by the reference numeral 20". The bag 48 can be by way of example a transparent synthetic material bag that is sealed on all sides, in particular welded, yet can also comprise an opening means such as a zip or the like.

The bag 48 is opened and the joining elements 20" contained therein are poured into the container 36 by way of the aperture if the filling flap is open (46A).

Once the container has been filled, the filling flap is closed so that it is possible to prevent objects being poured into the container 36 unintentionally.

Moreover, the joining element feed device 30 comprises an identification device 50. The identification device 50 comprises a reading device 52 that can be embodied by way of example as a scanner, a camera, an RFID reading device or the like. The reading device 52 is connected to a control unit 54, and in fact by way of a schematically illustrated data or signal connection 55. The control unit 54 is arranged in a control unit housing 56 that is fixed to the upper face of the cover 38 and in fact in a region at the side adjacent to the filling flap 46.

Identification codes that have been determined by the reading device 52 can be transmitted by way of the connection 55 to the control unit 54, where the identification codes can be checked.

The control unit 54 comprises further an interface 58 that can be embodied on the outside of the control unit housing 56. It is possible to connect a programming device 60, by way of example in the form of a laptop computer or the like, to the interface 58. The interface 58 can be a serial interface, a USB interface or the like.

It is possible to transmit by way of example approved identification codes to the control unit 54 by way of the interface 58 and to store said codes in a memory device of the control unit 54 so that the control unit 54 is able to compare identification codes that have been read in by way of the reading device 52 with stored identification codes in order to be able to perform an authentication check and/or authorization check.

Moreover, a closing device 62 can be fixed to the cover 38, and in fact preferably on an inner face of the cover 38. The closing device 62 can however also be embodied on the side of the housing 34, on the side of the cover 38 or also on the top of the cover 38. The closing device 62 is used to lock the filling flap 46 in the closed position and where necessary to unlock said filling flap in order to be able to move the filling flap into the filling position 46A. The closing device 62 is actuated by means of a motor and can also comprise a motor for the locking or unlocking process. The motor can be an electric motor, an electromagnet or the like. The closing device 62 is connected by way of an electrical connection 64 to the control unit 54. The control unit 54 can transmit an unlocking signal and/or a locking signal to the closing device 62 that then controls a motor, which is contained in said closing device, so that the filling flap is locked in the closed position or unlocked. The closing device 62 can by way of example be pre-tensioned into the closed position so that a simple signal is used in order to move the closing device into an unlocked position so that the filling flap 46 can be raised upwards and during subsequent locking said filling flap is automatically locked with respect to the cover 38 without further control input by means of the control unit 54.

Fig. 1 illustrates schematically a locking bar that can be used by way of example for this purpose and is indicated by the reference numeral 66.

As is illustrated in Fig. 2, the closing device 62 can be fixed to a lower face of the cover 38 and in fact in the region of a front edge of the cover so that the locking bar 66 can securely lock the filling flap. 46.

Fig. 2 further illustrates that an on/off switch 69 can be provided on the control unit housing 56 and a display device 68 can be allocated to said on/off switch. The control unit 54 can be connected by way of the on/off switch 69 to a schematically illustrated mains voltage 70. Energy can be supplied by way of the connections 64, 65 also to the reading device 52 and/or to the closing device 62. In other words, the connections 55, 64 can comprise both data lines and/or signal lines and also lines for transmitting energy, such as DC cables or AC cables. The display device 68 can be embodied on the control unit housing 56 independently from an on/off switch 69, or directly on the cover 38 or on the reading device 52.

A voltage converter 72 is provided for this purpose in the storage device housing 56 and said voltage converter converts by way of example a mains voltage 70 (AC voltage) to a suitable DC voltage.

The reading device 52 can comprise a presence sensor 74 in order to automatically perform a reading procedure insofar as an object which is to be read is positioned in the proximity of the reading device 52.

The control unit 54 can comprise a first memory device 76 that is embodied by way of example as a non-volatile memory device (e.g. ROM) and in which is stored by way of example a control program. Moreover, the control unit 54 can comprise a second memory device 78 that is embodied by way of example as a RAM memory or Flash memory and in which are stored by way of example approved identification codes.

The second memory device 78 can be written to or overwritten preferably by means of a programming device 60 by way of the interface 58.

As is illustrated in Fig. 1, it is possible to provide an identification code 82 on the bag 48 (or on any other container for the joining elements 20"). The identification code 82 can be a printed code that can be alphanumeric, a bar code, a OR code, a matrix code or the like. The identification code 82 can however also be formed by means of an RFID label (a transponder).

An operating person 83 for the joining machine 10, in particular for the joining element feed device 30, is equipped with an operating person identification card 84. The card 84 can comprise an image of the operating person 83, however, it comprises in particular an identification code 86 that identifies the operating person 83. The identification code 86 can be a code of the like type as the identification code 82 for the joining elements 20".

A method for pouring joining elements 20" into the container 36 can be achieved in the simplest manner as follows:

The bag 48 is held with its identification code 82 against the reading device 52 that reads the identification code 82 and transmits it to the control unit 54. The control unit 54 compares the identification code 82 with previously stored approved identification codes or with a special identification code. Provided that the comparison indicates that the joining elements 20" that are contained in the bag 48 are approved for pouring into the container 36, the control unit 54 emits a signal to the closing device 62, whereupon the closing device 62 unlocks the filling flap 46 so that the operating person can move the filling flap into the filling position 46A and subsequently pour into the container the joining elements 20" that are contained in the bag 48. Subsequently, the operating person closes the filling flap, whereupon the filling flap is automatically locked in the closed position by means of a mechanical pre-tensioning procedure or the like so that the joining element feed device 30 is moved back into a starting position as is also illustrated in Fig. 1. Subsequently, the joining elements that are contained in the container 36 can be singularized and delivered directly or indirectly to the joining tool 18. The above described procedure can be repeated provided that a new supply of joining elements is to be poured into the container 36.

The identification code 82 can be a product code that identifies by way of example a particular product number, in other words a particular type of joining element. The identification code 82 can however in addition also contain a batch number or the like. In this case, it is preferred when unlocking the filling flap 46 that both an approved identification code 82 with respect to the product and also an approved identification code with respect to the batch are available. It is possible in this manner to avoid that the same - empty - bag 48 is repeatedly used in an inadmissible manner for the filling procedures. It is preferred that the identification code 82 is a bag/identification code in the form of a product number in conjunction with a batch number and a bag number.

In one embodiment, approved batch numbers are stored in advance in the control unit 54. After identifying a particular batch number on a bag 48, this number is subsequently deleted in the control unit 54 or invalidated in any other manner so that the same bag cannot be used again for opening the filling flap 46. As an alternative to storing previously approved batch numbers, it is also possible to compare the structure of the batch number with an approved format. If the format corresponds to the predetermined format then the number is accepted and is stored for as long as a pre-programmed count number so that this number can no longer be used. If the pre-programmed count number (in particular of reading procedures) is achieved, the stored numbers are erased from the memory device in the same sequence as they are read in (fifo).

Moreover, it is possible as an alternative or in addition thereto, to unlock the filling flap 46 only if an approved operating person identification code 86 is present. For this purpose, the operating person 83 can hold the identification card 84 in front of the reading device 52 in order for the control unit 54 to identify said operating person. The filling flap 46 can be unlocked provided that the operating person 83 is also authorized to perform a filling procedure. The process of identifying the operating person can be performed in addition to the above described identification procedures or as an alternative thereto.

The identification device 50 is embodied as a module that is independent from the rest of the joining machine system or as an additional module. It is preferred that the identification device 50 is connected with the control unit 54, the reading device 52 and the closing device 62 exclusively to a mains voltage 70 without being connected to a higher-level controller.

A connection to such a higher-level controller is however possible, in which case it is also possible to achieve a statistical evaluation and recording over longer periods of time and afterwards it is also possible to establish when which bag was used for the filling procedure, and possibly by whom.

In some embodiments, it is only possible to relock the filling flap 46 in the closed position once the operating person identification code 86 has been re-read.

In the event of a failure of the identification device 50, it is possible where necessary to provide an emergency unlocking procedure in order to render possible an emergency operation of the container 36 and to be able to fill said container in an emergency.

The display device 68 can be by way of example a multi-coloured light emitting diode that can display whether the identification device 50 is ready for operation, whether the reading procedures were successful or not successful, whether time periods have been exceeded etc. This can be displayed by means of permanently illuminated displays or by means of flashing light displays.

Overall, it is possible to achieve with the joining element feed device 30 that fewer incorrect filling procedures occur. Moreover, it is possible where necessary to detect when and by whom the container 36 was filled. In the case of production defects, it is possible where necessary to read out from the memory device details relating to the batch last poured into the container. The identification device 50 can be replaced rapidly and can be retrofitted in particular to existing containers 36.

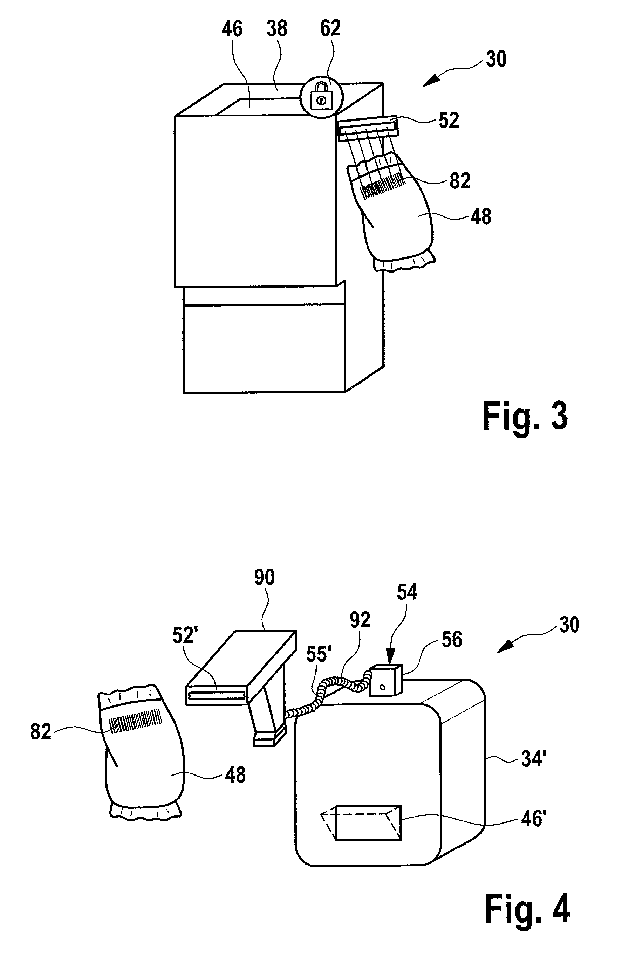

The following Figs. 3 and 4 illustrate further embodiments of joining element feed devices 30 that with respect to construction and the manner in which they function correspond in general to the joining element feed device 30 shown in Figs. 1 and 2. Like elements are identified by like reference numerals. The differences are explained essentially hereinunder.

It is evident in the case of the joining element feed device 30 shown in Fig. 3 that the reading device 52 is embodied as a scanner that can scan an identification code 82 in the form of a bar code on a bag 48. Moreover, a closing device 62 is illustrated schematically in Fig. 3.

In the case of the embodiment shown in Fig. 4, a filling flap 46 is not embodied on an upper face cover but rather on a side cover. Furthermore, the filling flap 46' is embodied on a different wall of the housing 34' than the control unit housing 56. It goes without saying that in this case the closing device 62 is fixed likewise on the particular wall or particular side cover on which is embodied also the filling flap 46'.

Moreover, it is evident in Fig. 4 that the reading device 52 is embodied on a hand-held reading device 90 that is connected to the control unit 54 by way of a flexible connection cable 92. The hand-held reading device 90 can be removed and can be used for all modules that have a corresponding interface on the module for the reading device. Only the person who is authorized to possess the hand-held reading device 90 can also fill one or more feed devices. The hand-held reading device can be held ready by a shift leader, for example.

It is generally possible to embody the reading device 90 as a hand-held device or as a reading device that as required can be fixed to or detached from the cover or the housing of the feed device. In each case, it is preferred if the reading device can be connected to the control unit 54 by way of a pre-defined interface, such as a USB interface, an RS232 interface or the like, either by way of a flexible connection cable 92 or by way of a fixedly routed cable that connects the control unit to such a plug connection. As a consequence, it is generally possible that one reading device can be used for many feed devices.

## Claims

1. Joining element feed device (30) comprising:
- a container (36) into which joining elements (20) can be poured and which is covered by means of a cover (38),
- a supply unit (40) that supplies the joining elements (20) from the container (36) for a joining process;
- an identification device (50) that is embodied so as to identify joining elements that are to be poured into the container (36) and/or a person (83) who intends to pour the joining elements (20") into the container (36),
wherein the identification device (50) comprises a control unit (54) that is connected to a reading device (52) for reading an identification code (82; 86), wherein an identification code (82; 86) that has been read by means of the reading device is checked and/or recorded in the control unit (54),
**characterized in that**
a closing device (62) that can be actuated by means of a motor and that is connected to the control unit is embodied so as to close the container (36).

2. Joining element feed device according to Claim 1, **characterized in that** a control unit housing (56) is fixed on an upper face of the cover or on a lower face of the cover and the control unit (54) is arranged in said control unit housing.

3. Joining element feed device according to Claim 1 or 2, **characterized in that** the reading device (52) is fixed with regard to the cover (38) and/or is connected by way of a plug connector to the control unit (54).

4. Joining element feed device according to any one of Claims 1 to 3, **characterized in that** the reading device (52') is embodied as a hand-held reading device that is connected by way of a flexible connection (55') to the control unit (54).

5. Joining element feed device according to any one of Claims 1 - 4, **characterized in that** the closing device (62) is arranged on a lower face of the cover (38).

6. Joining element feed device according to any one of Claims 1 to 5, **characterized in that** a filling flap (46) is mounted on the cover (38) in such a manner as to be able to move between a closed position and a filling position, wherein the closing device (62) is embodied so as to lock the filling flap (46) in the closed position with respect to the cover (38).

7. Joining element feed device according to any one of Claims 1 to 5, **characterized in that** the cover is mounted on the container in such a manner as to be able to move between a closed position and a filling position, wherein the closing device is embodied so as to lock the cover in the closed position with respect to the container.
